## Europäisches Patentamt
## European Patent Office
## Office européen des brevets

(19)

(11) Numéro de publication: **0 049 548**
**A1**

# DEMANDE DE BREVET EUROPEEN

(12)

(21) Numéro de dépôt: **81201089.0**

(22) Date de dépôt: **01.10.81**

(51) Int. Cl.³: **B 27 C 5/10**

(30) Priorité: **07.10.80 ES 253380 U**

(43) Date de publication de la demande:
**14.04.82 Bulletin 82/15**

(84) Etats contractants désignés:
**AT BE CH DE FR GB IT LI LU NL SE**

(71) Demandeur: **Galindo Castillo, Ramon**
**Calle Jaime Piquet no. 13**
**Barcelona(ES)**

(71) Demandeur: **Ardila Leon, José**
**Calle Jaime Piquet no. 13**
**Barcelona(ES)**

(71) Demandeur: **TALLERES CASALS S.A.**
**Carretera de San Juan s/n**
**Ripoll (Gerona)(ES)**

(72) Inventeur: **Castillo, Ramon Galindo**
**Calle Jaime Piquet No. 13**
**Barcelona(ES)**

(72) Inventeur: **Leon, José Ardila**
**Calle Jaime Piquet No. 13**
**Barcelona(ES)**

(74) Mandataire: **Pirson, Jean et al,**
**c/o Bureau GEVERS SA 7 rue de Livourne Bte 1**
**B-1050 Brussels(BE)**

(54) Dispositif de placement de gonds, charnières et articulations analogues.

(57) Dispositif de placement de gonds, comprenant une carcasse (1) contenant un moteur électrique et une transmission pour la commande d'un outil de fraisage (2), la carcasse présentant deux guides opposés (3,4) dans lesquels glissent des pièces en équerre (5,10;6) qui peuvent être ajustées en position, et supporter à leur extrémité libre des pièces d'appui (11,12) qui constituent un appui angulaire droit, l'une des pièces d'appui (11) pouvant être ajustée par rapport à l'autre (12) selon une direction (F') transversale à l'axe de l'outil (2), l'autre des pièces d'appui (12) présentant un évidement pour le passage de l'outil (2) et la sortie des copeaux.

FIG. 1

EP 0 049 548 A1

"Dispositif de placement de gonds, charnières et articulations analogues".

La présente invention est relative à un dispositif de placement de gonds, charnières et articulations analogues, du type comprenant un ensemble monobloc présentant une carcasse contenant un moteur électrique et une transmission correspondante pour la commande d'un outil de fraisage.

Plus précisément, pour cette invention, on a conçu un dispositif spécialement destiné à réaliser la dépouille prévue pour contenir les éléments de charnières ou gonds, son utilisation pouvant s'étendre à de multiples applications, partout où il est nécessaire d'obtenir une dépouille dans une position préétablie, telle que les dépouilles pour serrures et organes similaires.

En général, le dispositif faisant l'objet de la présente invention est du type comprenant une carcasse compacte dans laquelle est logé un moteur électrique pour commander la fraise, dans cette carcasse étant prévu un interrupteur de courant pour l'arrêt et la mise en marche du moteur.

Le dispositif suivant l'invention est caractérisé par le fait que la carcasse présente deux guides opposés, dans lesquels glissent des pièces en équerre qui peuvent être ajustées en position, notamment par des vis à pression, ces pièces en équerre supportant à leur extrémité en équerre libre des pièces d'appui qui constituent un appui angulaire droit, que l'une des pièces d'appui susmentionnées peut être ajustée par rapport à l'autre pièce d'appui, selon une direction transversale à l'axe de l'outil, ce qui permet de placer l'outil à une distance appropriée d'une arête d'appui de la surface à usiner et que l'autre des pièces d'appui présente un évidement pour le passage de l'outil et pour la sortie des copeaux, l'ajustement précité du support de ladite pièce permettant d'obtenir une profondeur de travail désirée de l'outil dans la surface à usiner. Ce dispositif comprend donc des supports réglables pour des guides prismatiques constituant un appui en équerre pour le travail du dispositif, et grâce à cet appui, l'outil est positionné exactement sur la zone de travail, ce qui permet ainsi d'obtenir une dépouille de profondeur également prévue, au moyen du réglage des supports des guides.

Comme il a été dit précédemment, le dispositif décrit est conçu spécialement pour l'installation de gonds et de charnières de n'importe quel genre, ce qui, comme l'on sait, exige d'obtenir une dépouille correspondante, opération qui se fait actuellement à la main et entraîne ainsi une augmentation de prix et une lenteur dans la réalisation, l'utilisation du dispositif suivant l'invention procurant une plus grande précision, un meilleur finissage et une uniformité totale.

Quoique l'utilité principale du dispositif soit mentionnée ci-dessus, ses applications sont multiples, car il peut travailler tout genre de bois, plastiques, métaux et autres matériaux.

D'autres détails et particularités de l'invention ressortiront de la description donnée ci-après, à titre non limitatif, et avec référence aux dessins annexés.

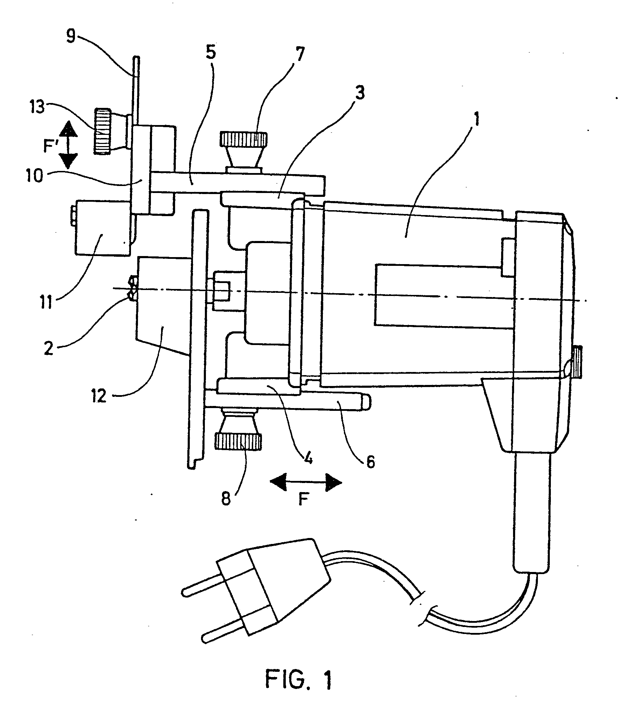

La figure 1 est une vue latérale d'un exemple de réalisation de dispositif suivant l'invention.

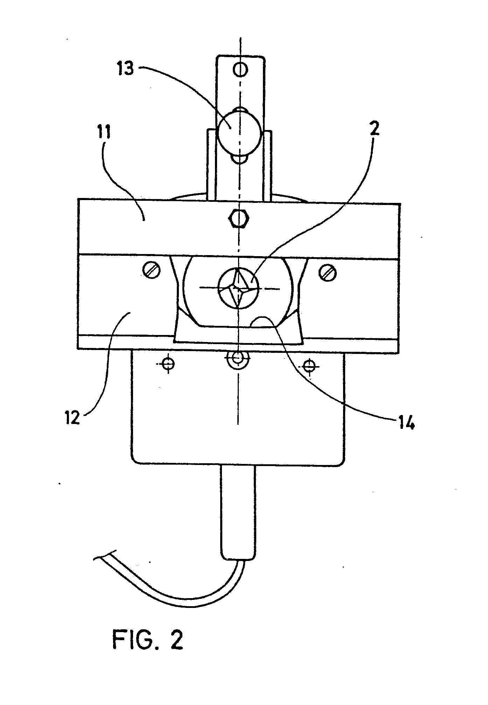

La figure 2 représente une vue frontale de ce dispositif.

Si l'on se réfère aux figures ci-dessus mentionnées, on voit que, dans cette forme de réalisation, le dispositif comprend une carcasse 1, comportant à l'intérieur un moteur électrique et des moyens de réduction de vitesse correspondants pour la commande de l'outil 2, lequel est constitué d'une fraise interchangeable.

La carcasse 1 présente des guides 3, 4, pour des supports en équerre 5, 6, capables de se déplacer sur les guides susdits et d'être ajustés en position par des vis à pression 7, 8.

L'un de ces supports forme, à l'une de ses extrémités, un autre guide 10 pour le support 9 d'une pièce prismatique 11, laquelle, avec la collaboration d'une pièce 12 solidaire de l'autre support 6, constitue un ensemble de guidage angulaire qui permet de placer l'outil 2 dans des conditions de travail constantes pour obtenir une dépouille d'une profondeur déterminée et à une distance également bien déterminée de l'arête du plan à travailler.

La profondeur de la dépouille s'obtient au moyen du support 6, en le déplaçant dans le sens de la flèche F, et la distance par rapport à l'arête s'obtient au moyen du support 9, en le déplaçant dans le sens de la flèche F', ce support étant positionné au moyen de la vis 13.

La pièce 12 présente un évidement 14 pour le passage de l'outil 2 et pour permettre la sortie des copeaux.

Le dispositif suivant l'invention peut être mis en oeuvre sous d'autres formes de réalisation, qui peuvent différer dans des détails de la forme indiquée à titre d'exemple dans la description, et qui seront également couvertes par la protection demandée. Donc, il pourra être construit sous n'importe quelle forme et de n'importe quelle grandeur, avec des matériaux appropriés, tout en restant compris dans le cadre de la présente demande de brevet.

REVENDICATION

Dispositif de placement de gonds, charnières et articulations analogues, du type comprenant un ensemble monobloc présentant une carcasse (1) contenant un moteur électrique et une transmission correspondante pour la commande d'un outil de fraisage (2), caractérisé en ce que la carcasse (1) présente deux guides opposés (3,4) dans lesquels glissent des pièces en équerre (5,10;6) qui peuvent être ajustées en position, notamment par des vis à pression (7,8), ces pièces en équerre (5,10;6) supportant à leur extrémité en équerre libre des pièces d'appui (11,12) qui constituent un appui angulaire droit, en ce que l'une des pièces d'appui susmentionnées (11) peut être ajustée par rapport à l'autre pièce d'appui (12) selon une direction (F') transversale à l'axe de l'outil (2), ce qui permet de placer l'outil (2) à une distance appropriée d'une arête d'appui de la surface à usiner, et en ce que l'autre des pièces d'appui (12) présente un évidement (14) pour le passage de l'outil (2) et pour la sortie des copeaux, l'ajustement précité du support (6) de ladite pièce (12) permettant d'obtenir une profondeur de travail désirée de l'outil (2) dans la surface à usiner.

FIG. 1

FIG. 2

Office européen
des brevets

**RAPPORT DE RECHERCHE EUROPEENNE**

Numéro de la demande

EP 81 20 1089.0

| | **DOCUMENTS CONSIDERES COMME PERTINENTS** | | | **CLASSEMENT DE LA DEMANDE (Int. Cl.³)** |
|---|---|---|---|---|
| Catégorie | Citation du document avec indication, en cas de besoin. des parties pertinentes | Revendication concernée | | |
| X | DE - U - 1 889 195 (AVODEC S.A.)<br>* pages 8 à 10; fig. 2 *<br><br>-- | 1 | | B 27 C 5/10 |
| | FR - A - 1 549 632 (M. STRIFFLER KG)<br>* page 2 colonne de gauche, lignes<br>39 à 54 *<br><br>---- | 1 | | |

**DOMAINES TECHNIQUES RECHERCHES (Int. Cl.³)**

B 27 C 5/10
B 27 F 5/12
B 23 C 1/20

**CATEGORIE DES DOCUMENTS CITES**

X: particulièrement pertinent
A: arrière-plan technologique
O: divulgation non-écrite
P: document intercalaire
T: théorie ou principe à la base
   de l'invention
E  demande faisant interférence
D. document cité dans
   la demande
L. document cite pour d'autres
   raisons

&: membre de la même famille.
   document correspondant

Le présent rapport de recherche a été établi pour toutes les revendications

| Lieu de la recherche | Date d'achèvement de la recherche | Examinateur |
|---|---|---|
| Berlin | 17-11-1981 | HOFFMANN |

OEB Form 1503.1  06.78